# EUROPÄISCHE PATENTSCHRIFT

(11) **EP 2 536 530 B1**
(45) Veröffentlichungstag und Bekanntmachung des Hinweises auf die Patenterteilung: **07.10.2020**
(21) Anmeldenummer: 11717494.6
(22) Anmeldetag: 21.04.2011
(51) Int. Cl.: B23Q 15/26, B23Q 16/02

(54) **VERFAHREN ZUM BETRIEB EINES SCHWENKANTRIEBS**
METHOD FOR OPERATING A PIVOT DRIVE
PROCÉDÉ POUR COMMANDER UN ENTRAÎNEMENT PIVOTANT

(30) Priorität: 23.04.2010 DE 102010018003
(43) Veröffentlichungstag der Anmeldung: 26.12.2012
(73) Patentinhaber: WEISS GmbH, 74722 Buchen (Odw.) (DE)
(72) Erfinder: HORN, Arnold, 74736 Hardheim-Erfeld (DE)
(74) Vertreter: Manitz Finsterwald Patent- und Rechtsanwaltspartnerschaft mbB
(86) Internationale Anmeldenummer: PCT/EP2011/002049
(87) Internationale Veröffentlichungsnummer: WO 2011/131367

(56) Entgegenhaltungen:
- EP-A1- 1 754 566
- EP-A1- 2 093 642
- EP-A2- 0 123 462
- DE-A1- 3 314 105
- DE-A1- 10 237 266

## Beschreibung

Die vorliegende Erfindung betrifft ein Verfahren zum Betrieb eines Schwenkantriebs, insbesondere eines Rundschalttischs, mit einem Drehteller, der von einem Motor zu einer Drehbewegung um eine Drehachse antreibbar ist.

Rundschalttische finden beispielsweise in der Montage- und Automatisierungstechnik eine breite Anwendung. Auf dem Drehteller werden Werkstücke angeordnet, die zu ihrer Bearbeitung und/oder Montage in kontinuierliche oder getaktete Drehbewegungen versetzt werden. Dabei ist die Präzision der Drehbewegung von besonderer Bedeutung, damit das Werkstück stets wohl definierte Positionen/Orientierungen relativ zu den jeweiligen Montage- oder Bearbeitungswerkzeugen aufweist.

Es versteht sich, dass das Betriebsverhalten eines Schwenkantriebs bzw. eines Rundschalttisches von den äußeren Belastungen abhängt. Mit anderen Worten verändert sich das Verhalten eines Schwenkantriebs, wenn die auf ihn wirkenden Belastungen verändert werden. Außerdem können Abnutzungserscheinungen an Komponenten des Schwenkantriebs oder ein Austausch von Komponenten dazu führen, dass sich das Verhalten des Schwenkantriebs ändert. Die genannten Ursachen können so weit führen, dass das geforderte Bewegungsprofil des Drehtellers von dem Schwenkantrieb nicht mehr in der notwendigen Präzision erbracht werden kann.

EP 2 093 642 A1 offenbart einen Drehtisch mit einer Tischplatte, wobei ein induktiver Ringsensor Winkeldaten zur Überwachung der Drehbewegung einer Antriebswalze liefert, wobei die durch den Sensor gelieferte Ist-Nullstellung mit einer idealen Nullstellung verglichen wird. Bei einer Abweichung der Ist-Nullstellung von der idealen Nullstellung von mehr als fünf Grad wird der Abschaltpunkt selbsttätig korrigiert, um die ermittelte Abweichung zu minimieren.

Es ist daher Aufgabe der vorliegenden Erfindung, ein Verfahren für einen möglichst zuverlässigen und präzisen Betrieb eines Schwenkantriebs zu schaffen, durch das insbesondere unterschiedliche Betriebszustände berücksichtigt werden können. Überdies soll das Verfahren möglichst einfach zu implementieren sein.

Diese Aufgabe wird durch ein Verfahren mit den Merkmalen des Anspruchs 1 gelöst.

Das erfindungsgemäße Verfahren findet bei einem Schwenkantrieb mit einem Drehteller Anwendung, der von einem Motor zu einer Drehbewegung um eine Drehachse antreibbar ist. Es ist zumindest ein Winkeldaten liefernder und mit einer Steuereinrichtung verbundener Sensor zur Überwachung einer Drehbewegung des Motors, des Drehtellers und/oder einer rotierenden Komponente eines zwischen dem Motor und dem Drehteller angeordneten Antriebsstrangs vorgesehen. Erfindungsgemäß werden die Sensordaten mit vorgegebenen und in der Steuereinrichtung hinterlegten SOLL-Daten verglichen, um bei einer Abweichung der Sensordaten von den SOLL-Daten zumindest einen die Drehbewegung charakterisierenden oder beeinflussenden Parameter anzupassen, um die ermittelte Abweichung zu minimieren.

Mit anderen Worten wird der Betrieb des Schwenkantriebs durch einen Sensor überwacht, wobei die Überwachung nicht zwangsläufig direkt an dem Drehteller oder dem Motor erfolgen muss. Der Sensor kann beispielsweise auch so angeordnet sein, dass er die Drehbewegung einer oder mehrerer Komponenten eines zwischen dem Motor und dem Drehteller liegenden Getriebes überwacht. Es ist auch möglich, mehrere Sensoren vorzusehen, deren Daten miteinander verglichen werden, um bei Abweichungen, die auf eine Fehlfunktion hindeuten, entsprechende Gegenmaßnahmen einleiten zu können.

Die Überwachung dient dabei dem Zweck, einen Schleppfehler zu identifizieren, der die Abweichung zwischen einer IST-Position der durch den Sensor überwachten Komponente und einer SOLL-Position derselben angibt. Befindet sich beispielsweise der Drehteller zu einem bestimmten Zeitpunkt in einer Dreh-/Winkelstellung (IST-Wert), die nicht einer vorgegebenen Dreh-/Winkelstellung (SOLL-Wert) entspricht, wird erkannt, dass ein Schleppfehler vorliegt. Um diesen zu reduzieren, wird zumindest ein Parameter variiert, der die Drehbewegung charakterisiert oder sie beeinflusst.

Beispielsweise ist der die Drehbewegung charakterisierende Parameter eine Geschwindigkeit, eine Beschleunigung des Drehtellers oder ein Antriebsparameter, der den Zustand des Antriebs des Schwenkantriebs widerspiegelt, wie etwa eine Leistungsaufnahme oder andere Betriebsparameter eines Antriebsmotors. Unter einem Parameter ist allerdings nicht nur ein fester Wert zu verstehen, der die Drehbewegung zu einem bestimmten Zeitpunkt oder in einer bestimmten Drehstellung charakterisiert. Er kann auch als Funktion aufgefasst werden. Das heißt ein festgestellter Schleppfehler kann beispielsweise zur Anpassung eines Geschwindigkeitsprofils oder eines Beschleunigungsprofils der Drehtellerbewegung genutzt werden, um den Schleppfehler zu minimieren.

Um keine Überregulierung der Drehtellerbewegung zu erzeugen, ist vorgesehen, dass die Sensordaten während eines Messzyklus, der einen vorbestimmten Zeitraum oder einen vorbestimmten Betrag der Drehbewegung umfasst, ermittelt werden. Die ermittelten Sensordaten (IST-Werte), die beispielsweise in Form einer vorbestimmten Anzahl von diskreten Einzeldaten vorliegen, wobei die vorbestimmte Anzahl beispielsweise von dem Auflösungsverhalten des Sensors abhängt, werden mit den entsprechenden SOLL-Werten verglichen, um einen messzyklusspezifischen IST-SOLL-Fehler zu bestimmen, der als Basis für die Anpassung des zumindest einen Parameters genutzt wird. Beispielsweise kann ein solcher Messzyklus einen oder mehrere Bewegungstakte des Drehtellers umfassen.

Nach einem Bewegungstakt wird ein kumulativer Schleppfehler berechnet, der aus den Einzelvergleichen der IST-Werte mit den SOLL-Werten ermittelt wird und der die Grundlage für die Anpassung eines oder mehrerer Parameter der Drehbewegung für den nächsten Takt bildet.

Der Messzyklus kann zumindest zwei Messintervalle umfassen, für die jeweils ein messintervallspezifischer IST-SOLL-Fehler bestimmt wird, wobei der messzyklusspezifische IST-SOLL-Fehler durch eine Mittelung der messintervallspezifischen IST-SOLL-Fehler bestimmt wird. Beispielsweise umfasst ein Messzyklus 5 Bewegungstakte eines Rundschalttischs. Für jeden Takt wird ein Schleppfehler bestimmt. Aus den erhaltenen 5 Schleppfehlern wird wiederum ein gemittelter Schleppfehler berechnet, der zur Anpassung des Parameters herangezogen wird.

Während des Messzyklus werden Einzelwerte der Sensordaten mit entsprechenden Einzelwerten der SOLL-Daten verglichen, um einen IST-SOLL-Fehler kontinuierlich zu aktualisieren und diesen mit einem Schwellenwert zu vergleichen. Bei Überschreitung des Schwellenwerts kann eine Fehlermeldung ausgegeben werden. Diese Maßnahme ermöglicht es, den Messzyklus abzubrechen, wenn zu große Schleppfehler auftreten. Dies ist beispielsweise dann der Fall, wenn eine gravierende Störung vorliegt (z.B. Blockade des Drehtellers), die bei einem weiteren Betrieb des Schwenkantriebs womöglich zu schweren Schäden führen könnte.

Vorzugsweise wird der Drehteller zu einer getakteten Drehbewegung angetrieben, wobei sich der Drehteller insbesondere zwischen zwei Takten in einer Ruheposition befindet. Wie bereits erwähnt, kann der vorstehend genannte Messzyklus einen oder mehrere Takte der Bewegung des Drehtellers umfassen.

Gemäß einer vorteilhaften Ausführungsform wird für einen Lernprozess zur Bestimmung eines für einen Standardbetrieb des Schwenkantriebs geeigneten Werts oder einer für einen Standardbetrieb geeigneten Funktion des zumindest einen Parameters ein eine vorbestimmte Anzahl von Messzyklen umfassender Lernzyklus absolviert. Der zumindest eine Parameter oder dessen Funktion wird im Verlauf des Lernzyklus iterativ angepasst, um die Abweichung zu minimieren. Insbesondere werden im Verlauf des Lernzyklus zumindest zwei Parameter oder deren Funktionen angepasst, wobei bevorzugt je Messzyklus nur ein Parameter oder dessen Funktion verändert wird.

Der Lernprozess kann eine vorbestimmte Anzahl von Lernzyklen umfassen, um einen Parameterwertsatz oder einen Satz von Funktionen des Parameters zu erhalten, wobei der Parametersatz oder der Funktionensatz gemittelt werden, um einen für einen Standardbetrieb geeigneten gemittelten Parameterwert oder eine geeignete gemittelte Funktion des Parameters zu bestimmen.

Es kann vorgesehen sein, den Lernprozess in einem unbelasteten Zustand des Schwenkantriebs und/oder in einem belasteten Zustand des Schwenkantriebs durchzuführen. Vorzugsweise werden verschiedene Belastungszustände eingelernt, um bei Belastungsänderungen auf zuvor eingelernte Werte zurückgreifen zu können, ohne dass ein erneuter Lernprozess durchgeführt werden muss. Es versteht sich, dass der Lernprozess bereits werkseitig oder am Einsatzort des Schwenkantriebs erfolgen kann.

Auf Basis des für einen Standardbetrieb geeigneten Werts des Parameters oder der für einen Standardbetrieb geeigneten Funktion des Parameters kann zumindest ein Schrankenwert bestimmt werden, dessen Über- und/ oder Unterschreitung bei einem Standardbetrieb des Schwenkantriebs eine Fehlermeldung oder Überwachungsmeldung auslöst. Mit anderen Worten wird der Parameterwert oder dessen Funktion selbst zur Bestimmung eines Toleranzbereichs herangezogen. Solange der Schleppfehler den Toleranzbereich nicht verlässt, wird davon ausgegangen, dass der Schwenkantrieb ordnungsgemäß funktioniert. Erst Abweichungen, die den Toleranzbereich verlassen, führen zu Fehlermeldungen oder Überwachungsmeldung. Derartige Meldungen können akustischer und/oder optischer Art sein. Auch können Meldungen ausgegeben werden, die zu einem Betriebsstopp führen. Die Meldung kann genutzt werden, um einen Anwender darauf hinzuweisen, dass ein neuer Einlernprozess erforderlich ist. Ein solcher Prozess kann auch automatisch eingeleitet werden.

Die Erfindung betrifft ferner einen Schwenkantrieb, insbesondere Rundschalttisch mit einem Drehteller, der von einem Motor zu einer Drehbewegung um eine Drehachse antreibbar ist, wobei zumindest ein Winkeldaten liefernder und mit einer Steuereinrichtung verbundener Sensor zur Überwachung einer Drehbewegung des Motors, des Drehtellers und/oder einer rotierenden Komponente eines zwischen dem Motor und dem Drehteller angeordneten Antriebsstrangs vorgesehen ist. Die Steuereinrichtung ist zur Ausführung des Verfahrens gemäß zumindest einer der vorstehend beschriebenen Ausführungsformen ausgebildet.

Der Drehteller des Schwenkantriebs kann in eine Antriebsnut einer Kurventrommel eingreifende Mitnehmer aufweisen, wobei der Drehteller über die Kurventrommel zu der Drehbewegung um die Drehachse antreibbar ist, die ihrerseits von einem Motor zu einer Drehbewegung um ihre Längsachse antreibbar ist.

Weitere Ausführungsformen der Erfindung sind in der Beschreibung, den Zeichnungen und den Unteransprüchen angegeben.

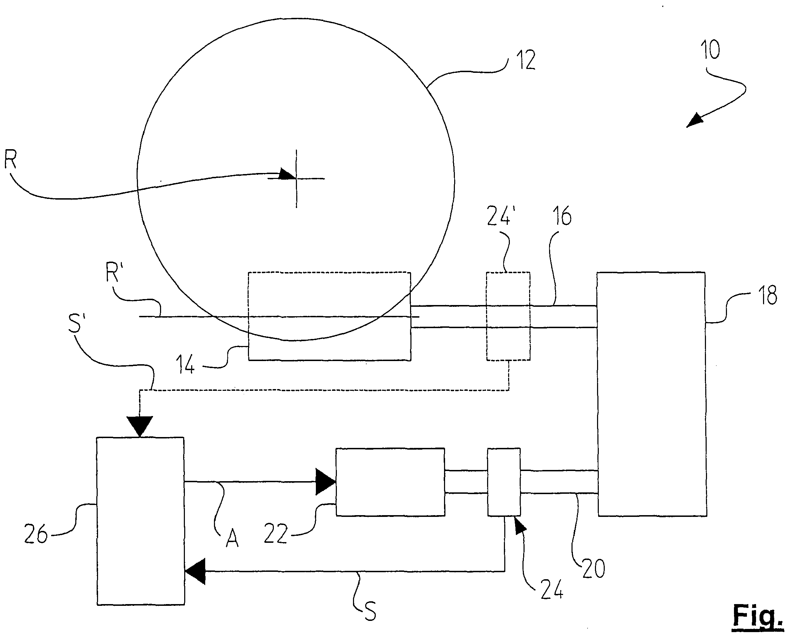

Nachfolgend wird die Erfindung rein beispielhaft anhand vorteilhafter Ausführungsformen unter Bezugnahme auf die beigefügte Zeichnung beschrieben.

Die einzige Figur zeigt in schematischer Weise einen Rundschalttisch 10, der einen Drehteller 12 aufweist, auf dem Werkstücke zur Bearbeitung und/oder Montage aufgespannt werden können. Der Drehteller 12 wird von einer Kurventrommel 14 zu einer Drehbewegung um eine Rotationsachse R angetrieben, die senkrecht zur Bildebene verläuft. Um eine Antriebsbewegung der Kurventrommel 14 in Form einer Rotation derselben um eine Rotationsachse R' senkrecht zu der Rotationsachse R des Drehtellers 12 auf den Drehteller 12 zu übertragen, weist letzterer Mitnehmer (nicht gezeigt) auf, die in an sich bekannter Weise in eine die Kurventrommel 14 spiralförmig umlaufende Antriebsnut (nicht gezeigt) mit konstanter oder variierender Steigung eingreifen.

Die Kurventrommel 14 steht drehfest mit einer Antriebswelle 16 in Verbindung. Die Antriebswelle 16 wiederum ist mit einem Ausgang eines Getriebes 18 verbunden. Dessen Eingang ist mit einer Motorwelle 20 verbunden. Die Motorwelle 20 wird von einem Motor 22 zu einer Drehbewegung angetrieben.

An der Motorwelle 20 ist ein Drehsensor 24 angeordnet, der die Drehbewegung der Motorwelle 20 erfasst und entsprechende Sensormesswerte S an eine Steuereinheit 26 übergibt. Die Steuereinheit 26 verarbeitet die Sensormesswerte S und wertet diese aus. Die Steuereinheit 26 bestimmt durch einen Vergleich der Sensormesswerte S mit Referenzwerten (IST-SOLL-Vergleich), ob die erfasste Drehbewegung den Vorgaben entspricht und passt gegebenenfalls einen Parameter bzw. eine Funktion des Parameters an, der die Drehbewegung charakterisiert. Beispielsweise wird ein Beschleunigungsprofil angepasst, dass zur Erzeugung des gewünschten Bewegungsprofils des Drehtellers 12 benötigt wird. Das Beschleunigungsprofil dient letztlich wiederum zur Steuerung der von dem Motor 22 abgegebenen Antriebsleistung. Um diese Steuerung zu realisieren, übermittelt die Steuereinheit 26 Steueranweisungen A an den Motor 22.

Mit anderen Worten liegt ein geschlossener Regelkreis vor, der direkt die Drehbewegung der Motorwelle 20 des Motors 22 überwacht und auf Basis der dabei ermittelten Daten letztlich auf die Drehbewegung des Drehtellers 12 einwirkt, indem die Steuerung des Motors 22 angepasst wird.

Alternativ oder zusätzlich kann ein Drehsensor 24' (gestrichelt dargestellt) vorgesehen sein, der die Drehbewegung der Antriebswelle 16 bzw. ihre jeweilige Winkellage erfasst und entsprechende Sensormesswerte S' an die Steuereinheit 26 überträgt. Ist nur der Sensor 24' vorhanden, so wird die von dem Motor 22 erbrachte Antriebsleistung indirekt erfasst, während die Drehbewegung der Kurventrommel 14 bzw. ihre jeweilige Winkellage direkt überwacht wird. Damit erfolgt die Überwachung "näher" an dem Drehteller 12, wodurch schwer quantifizierbare Effekte des in der Praxis nicht vollständig spielfrei zu fertigenden Getriebes 18 nicht in die Sensormesswerte S' einfließen. Mit anderen Worten repräsentieren die Sensormesswerte S' in der Regel die Position des Drehtellers 12 besser als die Sensormesswerte S, da dort nur Winkelfehler in Zusammenhang mit der Minehmer-Antriebsnut-Kopplung einfließen, nicht aber Winkelfehler in Zusammenhang mit dem Getriebe 18.

Auch bei dieser Variante erfolgt die Steuerung der Position des Drehtellers 12 über Steueranweisungen A an den Motor 22. Die Steueranweisungen A werden dann in Abhängigkeit der Sensormesswerte S' bestimmt.

Bei Ausführungsformen, die beide Sensoren 24, 24' aufweisen, können die Sensormesswerte S, S' gemeinsam berücksichtigt werden, beispielsweise zur Diagnose des Zustands des Antriebsstrangs des Rundschalttischs 10 oder seiner Komponenten (z.B. Getriebe 18) oder im Rahmen einer Feinabstimmung der Betriebsparameter für dessen Ansteuerung.

Es versteht sich, dass zusätzlich oder alternativ Sensoren an dem Drehteller 12 und/oder an rotierenden Komponenten des Getriebes 18 vorgesehen sein können, um den Betrieb des Rundschalttischs 10 zu überwachen.

Um den Rundschalttisch 10 für einen Standardbetrieb vorzubereiten, wird er unter verschiedenen Bedingungen getestet. Zunächst wird in der Steuereinheit 26 ein SOLL-Datensatz hinterlegt, der angibt, welche Winkellage die überwachte Komponente zu einem gegebenen Zeitpunkt aufweisen soll. Bei einem anschließenden Testlauf wird ermittelt, ob die tatsächliche Drehbewegung, die durch den Sensor 24, 24' ermittelt wird, den hinterlegten SOLL-Werten entspricht. Das heißt zu konkreten Zeitpunkten wird die Winkellage der überwachten, drehbar gelagerten Komponente ermittelt (IST-Wert) und mit einem entsprechenden SOLL-Wert verglichen. Eine Abweichung des IST-Werts von dem entsprechenden SOLL-Wert wird als Schleppfehler bezeichnet.

Wenn eine einen gewissen Schwellenwert überschreitende momentane IST-SOLL-Abweichung vorliegt, wird der Testlauf unterbrochen oder abgebrochen, da anzunehmen ist, dass eine gravierende Funktionsstörung vorliegt. Ansonsten werden die einzelnen Ergebnisse der diskreten IST-SOLL-Vergleiche gespeichert und am Ende eines ersten Messzyklus in einen kumulativen Schleppfehler umgerechnet. Der Messzyklus kann beispielsweise durch eine bestimmte Zeitdauer oder einen bestimmten Drehwinkel des Drehtellers definiert sein. Bei einem Rundschalttisch zur getakteten Bewegung eines Werkstücks bietet es sich an, dass ein oder mehrere Bewegungstakte als Messzyklus verwendet werden.

Der kumulative Schleppfehler eines Messzyklus ermöglicht Aussagen darüber, wie groß die Abweichung der tatsächlichen Bewegung von dem gewünschten Bewegungsprofil ist. Um den kumulativen Schleppfehler zu minimieren, wird zumindest ein vorgegebener Parameter geändert, der das Bewegungsprofil des Drehtellers kennzeichnet. Dies kann beispielsweise eine Geschwindigkeit oder eine Beschleunigung sein. Es ist auch möglich, ein Geschwindigkeitsprofil oder ein Beschleunigungsprofil anzupassen, um eine Minimierung des kumulativen Schleppfehlers zu erreichen. Beispielsweise kann eine Beschleunigungsrampe/-funktion verändert werden, um den Drehteller aus einer Ruheposition heraus langsamer oder schneller zu beschleunigen.

In dem nächsten Messzyklus wird erneut ein kumulativer Schleppfehler ermittelt und mit dem vorhergehenden verglichen. Auf Basis dieses Vergleichs wird nun entschieden, ob eine Vergrößerung oder eine Verkleinerung des Schleppfehlers eingetreten ist. In Abhängigkeit davon wird der zuvor geänderte Parameter (oder dessen Funktion) erneut geändert. Alternativ kann auch ein anderer Parameter geändert werden, um eine bessere Anpassung des IST-Betriebes an die vorgegebenen SOLL-Bedingungen anzupassen.

Die vorstehend beschriebene Vorgehensweise wird so lange durchgeführt, bis ein akzeptabler Schleppfehler erreicht ist. Um den Prozess robuster zu gestalten, kann vorgesehen sein, dass ein Messzyklus in mehrere Messintervalle unterteilt ist. Die in den einzelnen Intervallen ermittelten Schleppfehler werden gemittelt, um einen gemittelten kumulativen Schleppfehler zu bestimmen, der als Basis für eine Anpassung zumindest eines der Parameter dient. Zwar wird der Lernprozess dadurch etwas aufwändiger, allerdings fallen so zufällige "Ausreißer" oder Messfehler weniger ins Gewicht.

Es versteht sich, dass alternativ oder zusätzlich mehrere Lernzyklen mit einer vorbestimmten Anzahl von Messzyklen durchgeführt werden können, um mehrere Parametersätze oder Funktionssätze der Parameter zu erhalten, die wiederum gemittelt werden.

Am Ende des Prozesses steht ein iterativ veränderter charakteristischer Parameter, der für den unbelasteten Zustand einen Bewegungsverlauf erzeugt, der dem gewünschten SOLL-Verlauf am nächsten kommt. Beispielsweise erhält man ein optimiertes Beschleunigungsprofil des Drehtellers. Es versteht sich, dass in vielen Fällen nicht nur ein Parameter bzw. dessen Funktion einer Optimierung unterzogen wird. Mit etwas mehr Aufwand können auch zwei oder mehrere Parameter optimiert werden, um das Bewegungsprofil des Drehtellers an die Erwartungen anzupassen.

Das vorstehend beschriebene Verfahren kann für unterschiedliche Belastungszustände wiederholt werden, um so verschiedene Parametersätze bzw. Parameterfunktionensätze zu erhalten, die dann im Standardbetrieb entsprechend dem jeweils vorliegenden Anforderungsprofil ausgewählt werden können. Dies schließt nicht aus, dass am Einsatzort die jeweils vorliegende Belastungssituation einem eigenen Lernprozess unterworfen wird, um möglichst gute Resultate zu erzielen.

Das Verfahren kann bei einer Vielzahl von unterschiedlichen Schwenkantrieben und insbesondere Rundschalttischen zum Einsatz gelangen. Bei Rundschalttischen mit einem Drehteller, der in eine mit zumindest einem Rastgang versehene Antriebsnut einer Kurventrommel eingreifende Mitnehmer aufweist und der daher durch eine Drehung der Kurventrommel zu einer getakteten Drehbewegung angetrieben wird, ist das Verfahren insbesondere auch vorteilhaft einsetzbar, um eine Positionierung der Mitnehmer in Bezug auf den Rastgang zu optimieren. Ziel ist es dabei beispielsweise, einen in dem Rastgang befindlichen Mitnehmer durch eine präzise Kurventrommelbewegung (z.B. Nachlauf) in eine optimale Ausgangsposition zu bringen, damit eine anschließende Beschleunigungsphase exakt eingeleitet werden kann. Durch das vorstehend beschriebene Verfahren und seine einzelnen Ausführungsformen kann die dazu notwendige Präzision des Betriebs des Rundschalttischs gewährleistet werden.

### Bezugszeichenliste

- 10: Rundschalttisch
- 12: Drehteller
- 14: Kurventrommel
- 16: Antriebswelle
- 18: Getriebe
- 20: Motorwelle
- 22: Motor
- 24, 24': Drehsensor
- 26: Steuereinheit
- R, R': Rotationsachse
- S, S': Sensormesswerte
- A: Steueranweisung

## Patentansprüche

1. Verfahren zum Betrieb eines Schwenkantriebs, insbesondere eines Rundschalttischs, mit einem Drehteller (12), der von einem Motor (22) zu einer Drehbewegung um eine Drehachse (R) antreibbar ist, wobei zumindest ein Sensordaten liefernder und mit einer Steuereinrichtung verbundener Sensor (24, 24') zur Überwachung einer Drehbewegung des Motors (22), des Drehtellers und/ oder einer rotierenden Komponente eines zwischen dem Motor (22) und dem Drehteller (12) angeordneten Antriebsstrangs vorgesehen ist, wobei die Sensordaten Winkeldaten sind, wobei die Sensordaten mit vorgegebenen und in der Steuereinrichtung hinterlegten SOLL-Daten verglichen werden, um bei einer Abweichung der Sensordaten von den SOLL-Daten zumindest einen die Drehbewegung charakterisierenden oder beeinflussenden Parameter anzupassen, um die ermittelte Abweichung zu minimieren,
**dadurch gekennzeichnet, dass**
die Sensordaten während eines Messzyklus, der einen vorbestimmten Zeitraum oder einen vorbestimmten Betrag der Drehbewegung umfasst, ermittelt werden und die ermittelten Sensordaten mit den entsprechenden SOLL-Daten verglichen werden, um einen messzyklusspezifischen IST-SOLL-Fehler zu bestimmen, der als Basis für die Anpassung des zumindest einen Parameters genutzt wird, und dass
während des Messzyklus Einzelwerte der Sensordaten mit entsprechenden Einzelwerten der SOLL-Daten verglichen werden, um einen IST-SOLL-Fehler kontinuierlich zu aktualisieren und diesen mit einem Schwellenwert zu vergleichen, wobei insbesondere bei Überschreitung des Schwellenwerts eine Fehlermeldung ausgegeben wird.

2. Verfahren nach Anspruch 1,
**dadurch gekennzeichnet, dass**
der Drehteller (12) zu einer getakteten Drehbewegung angetrieben wird, wobei sich der Drehteller 812) insbesondere zwischen zwei Takten in einer Ruheposition befindet.

3. Verfahren nach Anspruch 1 oder 2,
**dadurch gekennzeichnet, dass**
der zumindest eine Parameter eine Geschwindigkeit, eine Beschleunigung, eine Geschwindigkeitsfunktion, eine Beschleunigungsfunktion oder ein Antriebsparameter ist.

4. Verfahren nach Anspruch 1,
**dadurch gekennzeichnet, dass**
der Messzyklus zumindest zwei Messintervalle umfasst, für die jeweils ein messintervallspezifischer IST-SOLL-Fehler bestimmt wird, wobei der messzyklusspezifische IST-SOLL-Fehler durch eine Mittelung der messintervallspezifischen IST-SOLL-Fehler bestimmt wird.

5. Verfahren nach Anspruch 1 oder 4,
**dadurch gekennzeichnet, dass**
der Messzyklus einen oder mehrere Takte der Bewegung des Drehtellers (12) umfasst.

6. Verfahren nach einem der Ansprüche 1, 4 oder 5,
**dadurch gekennzeichnet, dass**
für einen Lernprozess zur Bestimmung eines für einen Standardbetrieb geeigneten Werts oder einer für einen Standardbetrieb geeigneten Funktion des zumindest einen Parameters ein eine vorbestimmte Anzahl von Messzyklen umfassender Lernzyklus absolviert wird, wobei der zumindest eine Parameter oder dessen Funktion im Verlauf des Lernzyklus iterativ angepasst wird, um die Abweichung zu minimieren.

7. Verfahren nach Anspruch 6,
**dadurch gekennzeichnet, dass**
im Verlauf des Lernzyklus zumindest zwei Parameter oder deren Funktionen angepasst werden, wobei insbesondere je Messzyklus nur ein Parameter oder dessen Funktion verändert wird.

8. Verfahren nach Anspruch 6 oder 7,
**dadurch gekennzeichnet, dass**
der Lernprozess eine vorbestimmte Anzahl von Lernzyklen umfasst, um einen Parameterwertsatz oder einen Satz von zeitlichen Funktionen des Parameters zu erhalten, wobei der Parametersatz oder der Funktionensatz gemittelt werden, um einen für einen Standardbetrieb geeigneten gemittelten Parameterwert oder eine geeignete gemittelte Funktion des Parameters zu bestimmen.

9. Verfahren nach zumindest einem der Ansprüche 6 bis 8,
**dadurch gekennzeichnet, dass**
auf Basis des für einen Standardbetrieb geeigneten Werts des Parameters oder der für einen Standardbetrieb geeigneten Funktion des Parameters zumindest ein Schrankenwert bestimmt wird, dessen Über- und/ oder Unterschreitung bei einem Standardbetrieb des Schwenkantriebs eine Fehlermeldung auslöst.

10. Verfahren nach zumindest einem der Ansprüche 5 bis 9,
**dadurch gekennzeichnet, dass**
der Lernprozess in einem unbelasteten Zustand des Schwenkantriebs und/ oder einem belasteten Zustand des Schwenkantriebs durchgeführt wird.

11. Schwenkantrieb, insbesondere Rundschalttisch mit einem Drehteller (12), der von einem Motor (22) zu einer Drehbewegung um eine Drehachse (R) antreibbar ist, wobei zumindest ein Winkeldaten liefernder und mit einer Steuereinrichtung verbundener Sensor (24, 24') zur Überwachung einer Drehbewegung des Motors (22), des Drehtellers und/ oder einer rotierenden Komponente eines zwischen dem Motor (22) und dem Drehteller (12) angeordneten Antriebsstrangs vorgesehen ist, wobei die Steuereinrichtung zur Ausführung des Verfahrens gemäß zumindest einem der vorstehenden Ansprüchen ausgebildet ist.

12. Schwenkantrieb nach Anspruch 11,
**dadurch gekennzeichnet, dass**
der Drehteller in eine Antriebsnut einer Kurventrommel (14) eingreifende Mitnehmer aufweist, wobei der Drehteller (12) über die Kurventrommel (14) zu der Drehbewegung um die Drehachse (R) antreibbar ist, die ihrerseits von einem Motor (22) zu einer Drehbewegung um ihre Längsachse (R') antreibbar ist.

## Claims

1. A method of operating a pivot drive, in particular a rotary indexing table, having a turntable (12) which can be driven by a motor (22) to make a rotational movement about an axis of rotation (R), wherein at least one sensor (24, 24'), which delivers sensor data and which is connected to a control device, is provided for monitoring a rotational movement of the motor (22), of the turntable and/or of a rotating component of a drive train arranged between the motor (22) and the turntable (12), with the sensor data being angular data,
wherein the sensor data are compared with predefined DESIRED data stored in the control device to adapt at least one parameter characterizing or influencing the rotational movement on a deviation of the sensor data from the DESIRED data to minimize the determined deviation,
**characterized in that**
the sensor data are determined during a measuring cycle which comprises a predetermined time period or a predetermined amount of the rotational movement and the determined sensor data are compared with the corresponding DESIRED data to determine an ACTUAL/DESIRED error which is specific to the measuring cycle and which is used as the basis for the adaptation of the at least one parameter; and **in that**
individual values of the sensor data are compared with corresponding individual values of the DESIRED data during the measuring cycle to continuously update an ACTUAL/DESIRED error and to compare this error with a threshold value, with an error message in particular being output on an exceeding of the threshold value.

2. A method in accordance with claim 1,
**characterized in that**
the turntable (12) is driven to make a clocked rotational movement, with the turntable (12) in particular being in a position of rest between two cycles.

3. A method in accordance with claim 1 or claim 2,
**characterized in that**
the at least one parameter is a speed, an acceleration, a speed function, an acceleration function or a drive parameter.

4. A method in accordance with claim 1,
**characterized in that**
the measuring cycle comprises at least two measuring intervals for which a respective ACTUAL/DESIRED error is determined which is specific to the measuring interval, with the ACTUAL/DESIRED error specific to the measuring cycle being determined by an averaging of the ACTUAL/DESIRED error specific to the measuring interval.

5. A method in accordance with claim 1 or claim 4,
**characterized in that**
the measuring cycle comprises one or more cycles of the movement of the turntable (12).

6. A method in accordance with any one of the claims 1, 4 or 5,
**characterized in that**
a teaching cycle comprising a predetermined number of measuring cycles is completed for a teaching process for determining a value of the at least one parameter suitable for a standard operation or a function of the at least one parameter suitable for a standard operation, with the at least one parameter or its function being adapted iteratively in the course of the teaching cycle to minimize the deviation.

7. A method in accordance with claim 6,
**characterized in that**
at least two parameters or their functions are adapted in the course of the teaching cycle, with in particular only one parameter or its function being changed per measuring cycle.

8. A method in accordance with claim 6 or claim 7,
**characterized in that**
the teaching process comprises a predetermined number of teaching cycles to obtain a parameter value set or a set of time functions of the parameter, with the parameter set or the function set being averaged to determine an averaged parameter value suitable for a standard operation or a suitable averaged function of the parameter.

9. A method in accordance with at least one of the claims 6 to 8,
**characterized in that**
at least one threshold value is determined on the basis of the value of the parameter suitable for a standard operation or of the function of the parameter suitable for a standard operation, with an exceeding and/or falling below of said threshold value triggering an error message in a standard operation of the pivot drive.

10. A method in accordance with at least one of the claims 5 to 9,
**characterized in that**
the teaching process is carried out in a non-loaded state of the pivot drive and/or in a loaded state of the pivot drive.

11. A pivot drive, in particular a rotary indexing table, having a turntable (12) which can be driven by a motor (22) to make a rotational movement about an axis of rotation (R), wherein at least one sensor (24, 24'), which delivers angular data and which is connected to a control device, is provided for monitoring a rotational movement of the motor (22), of the turntable and/or of a rotating component of a drive train arranged between the motor (22) and the turntable (12), wherein the control device is configured to carry out the method in accordance with at least one of the preceding claims.

12. A pivot drive in accordance with claim 11,
**characterized in that**
the turntable has drivers engaging into a drive groove of a barrel cam (14), with the turntable (12) being able to be driven via the barrel cam (14) to make a rotational movement about the axis of rotation (R), which barrel cam (14) can in turn be driven by a motor (22) to make a rotational movement about its longitudinal axis (R').

## Revendications

1. Procédé pour faire fonctionner un entraînement pivotant, en particulier une table de commande circulaire, comportant un plateau tournant (12) qui peut être entraîné par un moteur (22) pour effectuer un mouvement de rotation autour d'un axe de rotation (R),
dans lequel
il est prévu au moins un capteur (24, 24') fournissant des données de capteur et relié à un dispositif de commande pour surveiller un mouvement de rotation du moteur (22), du plateau tournant et/ou d'un composant rotatif d'un train d'entraînement disposé entre le moteur (22) et le plateau tournant (12),
les données de capteur sont des données angulaires,
les données de capteur sont comparées à des données de consigne prédéterminées stockées dans le dispositif de commande afin d'adapter au moins un paramètre caractérisant ou influençant le mouvement de rotation en cas d'écart des données de capteur par rapport aux données de consigne, afin de minimiser l'écart déterminé,
**caractérisé en ce que**
les données de capteur sont déterminées au cours d'un cycle de mesure qui comprend une période de temps prédéfinie ou une part prédéfinie du mouvement de rotation, et les données de capteur déterminées sont comparées aux données de consigne correspondantes afin de définir une erreur état réel/consigne spécifique au cycle de mesure qui est utilisée comme base pour l'adaptation dudit au moins un paramètre, et **en ce que** pendant le cycle de mesure, des valeurs individuelles des données de capteur sont comparées à des valeurs individuelles correspondantes des données de consigne, afin d'actualiser en continu une erreur état réel/consigne et de la comparer à une valeur seuil, un message d'erreur étant émis en particulier en cas de dépassement de la valeur seuil.

2. Procédé selon la revendication 1,
**caractérisé en ce que**
le plateau tournant (12) est entraîné en un mouvement de rotation cadencé, en particulier le plateau tournant (12) étant en position de repos entre deux cadences.

3. Procédé selon la revendication 1 ou 2,
**caractérisé en ce que**
ledit au moins un paramètre est une vitesse, une accélération, une fonction de vitesse, une fonction d'accélération ou un paramètre d'entraînement.

4. Procédé selon la revendication 1,
**caractérisé en ce que**
le cycle de mesure comprend au moins deux intervalles de mesure, pour chacun desquels une erreur état réel/consigne spécifique à l'intervalle de mesure est définie, l'erreur état réel/consigne spécifique au cycle de mesure étant définie en faisant la moyenne des erreurs état réel/consigne spécifiques à l'intervalle de mesure.

5. Procédé selon la revendication 1 ou 4,
**caractérisé en ce que**
le cycle de mesure comprend une ou plusieurs cadences du mouvement du plateau tournant (12).

6. Procédé selon l'une des revendications 1, 4 ou 5,
**caractérisé en ce que**
pour un processus d'apprentissage destiné à définir une valeur appropriée pour un fonctionnement standard ou une fonction dudit au moins un paramètre appropriée pour un fonctionnement standard, un cycle d'apprentissage comprenant un nombre prédéfini de cycles de mesure est mis en œuvre, ledit au moins un paramètre ou sa fonction étant adapté(e) de manière itérative au cours du cycle d'apprentissage afin de minimiser l'écart.

7. Procédé selon la revendication 6,
**caractérisé en ce que**
au moins deux paramètres ou leurs fonctions sont adaptés au cours du cycle d'apprentissage, en particulier un seul paramètre ou sa fonction étant modifié(e) par cycle de mesure.

8. Procédé selon la revendication 6 ou 7,
**caractérisé en ce que**
le processus d'apprentissage comprend un nombre prédéfini de cycles d'apprentissage pour obtenir un ensemble de valeurs de paramètres ou un ensemble de fonctions temporelles du paramètre, l'ensemble de paramètres ou l'ensemble de fonctions étant moyenné pour définir une valeur de paramètre moyennée appropriée pour un fonctionnement standard, ou une fonction de paramètre moyennée appropriée.

9. Procédé selon l'une au moins des revendications 6 à 8,
**caractérisé en ce que**
sur la base de la valeur de paramètre appropriée pour un fonctionnement standard ou sur la base de la fonction de paramètre appropriée pour un fonctionnement standard, au moins une valeur de barrière est définie, dont le dépassement vers le haut et/ou vers le bas déclenche un message d'erreur lors d'un fonctionnement standard de l'entraînement pivotant.

10. Procédé selon l'une au moins des revendications 5 à 9,
**caractérisé en ce que**
le processus d'apprentissage est mis en œuvre dans un état non chargé de l'entraînement pivotant et/ou dans un état chargé de l'entraînement pivotant.

11. Entraînement pivotant, en particulier table de commande circulaire, comportant un plateau tournant (12) qui peut être entraîné par un moteur (22) pour effectuer un mouvement de rotation autour d'un axe de rotation (R),
dans lequel
il est prévu au moins un capteur (24, 24') fournissant des données de capteur et relié à un dispositif de commande pour surveiller un mouvement de rotation du moteur (22), du plateau tournant et/ou d'un composant rotatif d'un train d'entraînement disposé entre le moteur (22) et le plateau tournant (12),
le dispositif de commande est réalisé pour mettre en œuvre le procédé selon l'une au moins des revendications précédentes.

12. Entraînement pivotant selon la revendication 11,
**caractérisé en ce que**
le plateau tournant présente des entraîneurs s'engageant dans une rainure d'entraînement d'un tambour à came (14), le plateau tournant (12) pouvant être entraîné en le mouvement de rotation autour de l'axe de rotation (R) par le tambour à came (14) qui peut être entraîné à son tour en un mouvement de rotation autour de son axe longitudinal (R') par un moteur (22).
